# EUROPÄISCHE PATENTSCHRIFT

(11) **EP 1 930 082 B1**
(45) Veröffentlichungstag und Bekanntmachung des Hinweises auf die Patenterteilung: **15.12.2010**
(21) Anmeldenummer: 07020759.2
(22) Anmeldetag: 24.10.2007
(51) Int. Cl.: B05B 7/14, B65G 53/66

(54) **Vorrichtung zum Fördern fluidisierbarer Medien**
Device for transporting fluidizable media
Dispositif d'alimentation de milieux fluidisables

(30) Priorität: 08.12.2006 DE 102006057898
(43) Veröffentlichungstag der Anmeldung: 11.06.2008
(73) Patentinhaber: EISENMANN Anlagenbau GmbH & Co. KG, 71032 Böblingen (DE)
(72) Erfinder: Reichler, Jan, 78465 Konstanz (DE)
(74) Vertreter: Ostertag, Ulrich

(56) Entgegenhaltungen:
- EP-A- 0 747 305
- WO-A-2006/084253
- CH-A5- 658 442
- DE-A1- 3 708 015
- DE-A1- 19 539 610
- GB-A- 1 315 386
- US-A- 5 323 547

## Beschreibung

Die Erfindung betrifft eine Vorrichtung zum Fördern fluidisierbarer Medien, insbesondere von Lackpulver, mit
a) einem Vorlagebehälter, aus welchem fluidisiertes Medium zu einem Verbraucher förderbar ist;
b) einer Befülleinrichtung, aus welcher fluidisiertes Medium in den Vorlagebehälter förderbar ist;
c) einem Verbindungsweg, welchen fluidisiertes Medium auf dem Weg von der Befülleinrichtung in den Vorlagebehälter durchströmt;
d) einer im Verbindungsweg vorgesehenen Ventileinrichtung, mittels welcher der Verbindungsweg wahlweise verschließbar oder freigebbar ist und welche ein fluidbetätigtes Ventil umfasst, mit dem der Verbindungsweg wahlweise verschließbar oder freigebbar ist und welches über eine Fluidleitung mit einer Fluidquelle in Verbindung steht;
e) Betriebsmitteln, welche zum Betrieb der Ventileinrichtung notwendig sind.

Derartige Vorrichtungen, wie sie beispielsweise aus der US 5 323 547 A bekannt sind, werden insbesondere in der Oberflächentechnik, z. B. in der Automobilindustrie, zum Fördern von Lackpulver verwendet. Vorrichtungen der eingangs genannten Art können beispielsweise eingesetzt werden, um Lackpulver zu einem Verbraucher in Form einer Applikationseinrichtung, wie z.B. eines Rotationszerstäubers, zu fördern. Häufig wird eine derartige Vorrichtung jedoch auch dafür verwendet, Lackpulver aus einem Reservoir, wie einem sogenannten Big-Bag, in dem das Lackpulver angeliefert wird, zu einem Vorlagebehälter einer anderen Fördervorrichtung zu überführen, von dem aus das Lackpulver zu einer Applikationseinrichtung gefördert wird.

Bei Vorrichtungen der eingangs genannten Art erfolgt die Überführung von fluidisiertem Lackpulver aus der Befülleinrichtung in den Vorlagebehälter häufig hauptsächlich mittels Schwerkraft. Dazu ist die Befülleinrichtung höher als der Vorlagebehälter angeordnet und über eine in Strömungsrichtung nach unten geneigte Leitung mit diesem verbunden. Zur Überführung von Lackpulver aus der Befülleinrichtung in den Vorlagebehälter wird die Ventileinrichtung im Verbindungsweg derart angesteuert, daß sie den Durchgang des Verbindungsweges freigibt.

Beim Fördern eines fluidisierbaren Mediums ist es notwendig, daß dieses fluidisiert vorliegt. Ein aufgrund seiner Fluidisierung fließfähiges Lackpulver strömt dann durch den Verbindungsweg in den Vorlagebehälter. Ist ausreichend Lackpulver in den Vorlagebehälter überführt worden, wird der Verbindungsweg zwischen Befülleinrichtung und Vorlagebehälter verschlossen, indem die Ventileinrichtung entsprechend angesteuert wird. Die Fluidisierung des Lackpulvers muß zum Fördern desselben aus dem Vorlagebehälter aufrechterhalten werden. Üblicherweise wird dazu in den Vorlagebehälter ein Fluidisierungsgas eingeblasen, wobei fluidisiertes Lackpulver ein größeres Volumen einnimmt als nicht fluidisiertes Lackpulver.

Damit das im Vorlagebehälter vorliegende Lackpulver fluidisiert bzw. dessen Fluidisierung aufrecht erhalten werden kann, darf sich nie soviel Lackpulver im Vorlagebehälter befinden, daß unfluidisiertes Lackpulver dessen Innenraum fast vollständig füllen würde. Daher muß der Verbindungsweg zwischen der Befülleinrichtung und dem Vorlagebehälter wenigstens so lange verschlossen bleiben, bis Lackpulver aus dem Vorlagebehälter entnommen wurde und darin ausreichend Volumen für neues Lackpulver freigeworden ist.

Eine Ventileinrichtung zwischen der Befülleinrichtung und dem Vorlagebehälter ist häufig als druckluftbetätigtes Ventil ausgebildet, welches unter Druckluftbeaufschlagung seine Schließstellung einnimmt. Dementsprechend zählt zu den eingangs genannten Betriebsmitteln, welche zum Betrieb der Ventileinrichtung notwendig sind, eine entsprechende DruckluftQuelle. Üblicherweise sind zum Betrieb der Ventileinrichtung auch eine Steuerung sowie eine elektrische Energieversorgung, die unter anderem auch die Steuerung speist, notwendig. Die hier genannten Betriebsmittel umfassen daher auch, ohne daß dies eine abschließende Aufzählung bedeutet, eine Steuerung für die Ventileinrichtung, eine entsprechende Energieversorgung, Vorrichtungen zu Erzeugung von Steuersignalen und dergleichen.

Falls nun eine oder mehrere der genannten Betriebsmittel ausfallen, kann es bei bekannten Vorrichtungen der eingangs genannten Art vorkommen, daß die im Verbindungsweg zwischen der Befülleinrichtung und dem Vorlagebehälter vorgesehene Ventileinrichtung nicht mehr ihre Schließstellung einnehmen oder darin gehalten werden kann, so daß der Durchgang des Verbindungsweges frei ist oder wird und Lackpulver in einer Situation aus der Befülleinrichtung in den Vorlagebehälter gelangt, in der dies unerwünscht ist. In diesem Fall muß der Betrieb der Lackieranlage unterbrochen, der Vorlagebehälter manuell geöffnet und daraus Pulver entnommen werden. Dies bedeutet einen zeitweisen Stillstand der gesamten Lackieranlage. Zu einem Ausfall der Betriebsmittel zählt auch, daß beispielsweise eine Versorgungsleitung oder eine elektrische Leitung oder dergleichen defekt ist, so daß die Ventileinrichtung nicht mehr ordnungsgemäß betrieben werden kann.

Aufgabe der Erfindung ist es, eine Vorrichtung der eingangs genannten Art zu schaffen, bei welcher beim Ausfall eines oder mehrerer Betriebsmittel die Möglichkeit eröffnet ist, daß kein Lackpulver aus der Befülleinrichtung in den Vorlagebehälter gelangen kann.

Diese Aufgabe wird bei einer Vorrichtung der eingangs genannten Art dadurch gelöst, daß
f) eine Sicherheitseinrichtung vorgesehen ist, durch welche die Ventileinrichtung bei einem teilweisen oder vollständigen Ausfall der Betriebsmittel derart steuerbar ist, dass sie ihre Schließstellung einnimmt, und welche
   fa) ein mittels Fluidbeaufschlagung entriegelbares Rückschlagventil umfasst, welches in der Fluidleitung angeordnet ist und zum Zwecke seiner Entriegelung aus derselben Fluidquelle mit Fluid beaufschlagbar ist wie das fluidbetätigte Ventil der Ventileinrichtung, und welches ohne Fluidbeaufschlagung die Fluidleitung in Richtung auf die Fluidquelle verschließt;
   fb) außerdem ein durch ein Steuersignal einstellbares Ventil umfasst, welches in der Fluidleitung zwischen dem entriegelbaren Rückschlagventil und der Fluidquelle angeordnet ist und ohne eine Signalbeaufschlagung eine Stellung einnimmt, in welcher es die Fluidleitung in Richtung auf das fluidbetätigte Ventil freigibt.

Die Ventileinrichtung kann dabei bei einem Ausfall der Betriebsmittel aus einer Offenstellung in ihre Schließstellung überführt werden oder in der Schließstellung gehalten werden, wenn sie diese bereits einnimmt.

Sollte die Fluidquelle als Betriebsmittel ausfallen, würde das bei intakter Fluidquelle stets entriegelte Rückschlagventil schließen, wodurch ein Entlüften des fluidbetätigten Ventils im Verbindungsweg verhindert wäre. Wenn das fluidbetätigte Ventil der Ventileinrichtung beim Ausfall der Fluidquelle bereits seine Schließstellung einnimmt, wird es in seiner Schließstellung gehalten.

Ein ergänzender Schutz ergibt sich dadurch, daß die Sicherheitseinrichtung außerdem ein durch ein Steuersignal einstellbares Ventil umfaßt, welches in der Fluidleitung zwischen dem entriegelbaren Rückschlagventil und der Fluidquelle angeordnet ist und ohne eine Signalbeaufschlagung eine Stellung einnimmt, in welcher es die Fluidleitung in Richtung auf das fluidbetätigte Ventil freigibt.

Wenn dieses Ventil derart ausgebildet ist, daß es bei einer Signalbeaufschlagung eine Stellung einnimmt, in welcher die Fluidleitung mit der Umgebung in Verbindung steht, kann damit zusätzlich die Fluidleitung und somit das fluidbetätigte Ventil entlüftet werden. Das durch ein Steuersignal einstellbare Ventil dient also zur Steuerung der Fluidbeaufschlagung des fluidbetätigten Ventils im Verbindungsweg zwischen der Befülleinrichtung und dem Vorlagebehälter. Bei dem Steuersignal handelt es sich vorzugsweise um ein elektrisches Steuersignal.

Sollte die Ansteuerung des durch ein Steuersignal ein- stellbaren Ventils ausfallen, so gibt dieses die Fluidleitung zur Fluidbeaufschlagung des fluidbetätigten Ventils im Verbindungsweg frei. Dadurch nimmt letzteres - eine funktionierende Fluidquelle vorausgesetzt - seine Schließstellung ein. Diese wird dann so lange aufrecht erhalten, bis der Defekt der Steuerung behoben ist, wodurch es zu keiner unerwünschten Förderung von Lackpulver aus der Befülleinrichtung zum Vorlagebehälter kommt.

Es ist vorteilhaft, wenn das fluidbetätigte Ventil derart einstellbar ist, daß es den Durchgang des Verbindungsweges nur teilweise freigibt. Dies ist auf technisch einfache Weise dadurch zu ermöglichen, daß in der zum fluidbetätigten Ventil führenden Fluidleitung ein einstellbares Drosselventil vorgesehen ist. Durch dieses kann der Fluidstrom aus der Fluidquelle in Richtung auf das fluidbetätigte Ventil gedrosselt werden. Das einstellbare Drosselventil ist bevorzugt in Richtung auf das fluidbetätigte Ventil gesehen direkt hinter der Fluidquelle angeordnet.

In einer Abwandlung bildet das Drosselventil zusammen mit einem Rückschlagventil ein einstellbares Drosselrückschlagventil, durch welches der Fluidstrom aus der Fluidquelle in Richtung auf das fluidbetätigte Ventil drosselbar, in Gegenrichtung jedoch freigegeben ist. Das Drosselrückschlagventil ist vorzugsweise in Richtung auf das fluidbetätigte Ventil gesehen direkt vor dem entriegelbaren Rückschlagventil angeordnet.

Soll das fluidbetätigte Ventil im Verbindungsweg zwischen der Befülleinrichtung und dem Vorlagebehälter vollständig schließen, so wird die Drosselung des Drosselrückschlagventils durch eine entsprechende Ansteuerung aufgehoben. In Richtung auf die Fluidquelle ist durch das Rückschlagventil im Drosselrückschlagventil stets ein freier Durchgang für Fluid gewährleistet, und zwar durch eine entsprechende Ausrichtung des Rückschlagventils. So ist eine rasche Entlüftung des fluidbetätigten Ventils stets ohne Drosselung möglich.

Es ist insbesondere vorteilhaft, wenn die Ventileinrichtung eine Spüleinrichtung umfaßt, mittels welcher ein Spülgas in den Durchgang des fluidbetätigten Ventils einblasbar ist. Auf diese Weise kann das Innere des fluidbetätigten Ventils von noch darin befindlichem Lackpulver gereinigt werden, wodurch das fluidbetätigte Ventil besser schließen kann. Durch die oben angesprochene Möglichkeit, das fluidbetätigte Ventil nur teilweise zu schließen, wird die Reinigungseffizienz noch erhöht.

Nachstehend werden Ausführungsbeispiele der Erfindung anhand der Zeichnung näher erläutert. In dieser zeigen:
- Figur 1: eine Vorrichtung zum Fördern fluidisierbarer Medien mit einer Sicherheitseinrichtung und einem Drosselrückschlagventil;
- Figur 2: eine Abwandlung der Vorrichtung von Figur 1, bei der anstelle des Drosselrückschlagventils ein Drosselventil in anderer Position vorgesehen ist.

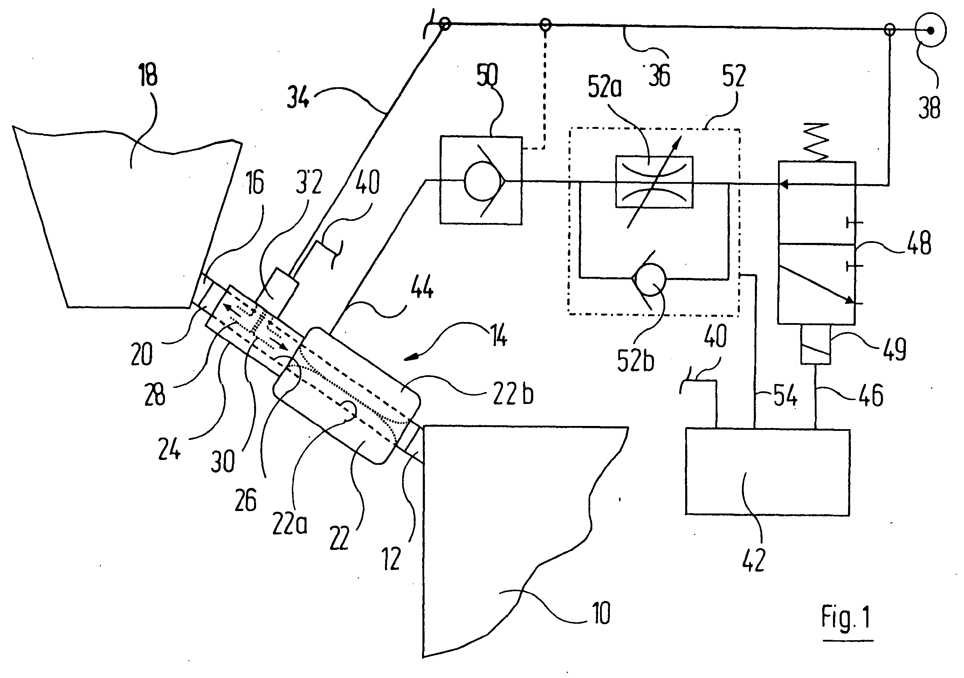

In Figur 1 ist mit 10 ein nur teilweise und stark schematisch gezeigter Vorlagebehälter einer Pulverförderpumpe bezeichnet, wie sie grundsätzlich in Beschichtungsanlagen, insbesondere in Lackieranlagen, zum Einsatz kommen kann. Im Innenraum des Vorlagebehälters 10 befindliches Lackpulver wird auf hier nicht näher interessierende Weise in fluidisierter Form zu einem Verbraucher, wie beispielsweise einer Applikationseinrichtung, gefördert.

Um den Vorlagebehälter 10 mit Lackpulver befüllen zu können, ist ein oben am Vorlagebehälter 10 vorgesehener Einlaßstutzen 12 über einen Verbindungsweg 14 mit einem Abgabestutzen 16 einer Befülleinrichtung 18 verbunden. Letztere ist in der Figur ebenfalls nur teilweise und stark schematisch gezeigt.

Der Verbindungsweg 14 ist als zwischen der Befülleinrichtung 18 und dem Vorlagebehälter 10 nach unten geneigtes Verbindungsrohr 20 ausgebildet. In diesm ist ein Quetschventil 22 sowie ein Spülventil 24 vorgesehen.
Eine Anschlußöffnung des Spülventils 24 zeigt in Richtung auf die Befülleinrichtung 18. An seiner gegenüberliegenden Anschlußöffnung ist das Spülventil 24 mit dem Quetschventil 22 verbunden.

Das Quetschventil 22 umfaßt einen einen inneren Durchgangsweg begrenzenden elastischen Schlauch 22a, der von einem Druckraum 22b umgeben ist. Wenn der Druckraum 22b unter Druck mit einem Gas beaufschlagt wird, wird der Schlauch 22a aus einem entspannten Zustand in einen komprimierten Zustand überführt und kann bei einer maximalen Komprimierung aufgrund einer entsprechenden Innenkontur den Durchgang vollständig verschließen. Dadurch ist der Durchgangsquerschnitt des Quetschventils 22 abhängig von dem im Druckraum 22b vorliegenden Druck einstellbar.

Das Verbindungsrohr 20, das Quetschventil 22 und das Spülventil 24 begrenzen einen gemeinsamen Durchgangskanal 26 mit - bei vollständig geöffnetem Quetschventil 22 - weitgehend konstantem Durchgangsquerschnitt. Der Durchgangskanal 26 ist in der Figur im Bereich des Quetschventils 22 und des Spülventils 24 mit gestrichelten Linien angedeutet und stimmt in diesem Bereich mit dem Verlauf des entspannten Schlauches 22a überein.

Das Spülventil 24 ist bidirektional und weist dazu zwei Düsen 28 und 30 auf. Diese sind mit Hilfe eines Steuerventils 32 wahlweise einzeln oder beide aus einer Leitung 34 mit Spülluft beaufschlagbar. Dazu ist die Leitung 34 mit einer Hauptleitung 36 verbunden, die aus einer Spülluft-Quelle 38 gespeist wird. Über die Düse 28 kann Spülluft in Richtung auf die Befülleinrichtung 18 in den Durchgangskanal 26 des Verbindungsweges 14 abgegeben werden. Aus der Düse 30 kann Spülluft dagegen in Richtung auf das Quetschventil 22 in den Durchgangskanal 26 des Verbindungsweges 14 strömen.

Die Stellungen des Steuerventils 32 sind über eine Steuerleitung 40 durch eine Steuerung 42 einstellbar. Je nach Stellung des Steuerventils 32 strömt Spülluft aus der Düse 28 oder aus der Düse 30 oder aus beiden Düsen 28, 30 gleichzeitig.

Der Druckraum 22b des Quetschventils 22 ist über eine ebenfalls mit der Hauptleitung 36 verbundene Fluidleitung 44 mit einem Steuergas beaufschlagbar, welches in Form der Spülluft aus der Spülluft-Quelle 38 bereitgestellt ist. Wie bereits erwähnt, verringert sich der Durchgangsquerschnitt des Quetschventils 22 abhängig von dem am Druckraum 22b anliegenden Druck, indem der elastische Schlauch 22a komprimiert wird. Die Schließstellung des Quetschventils 22, bei welcher der Durchgangskanal 26 verschlossen ist, ist in der Figur durch zwei sich berührende gepunktete Linien angedeutet. Liegt am Quetschventil 22 bzw. an dessen Druckraum 22b kein durch das Steuergas erzeugter Überdruck, sondern ein dem Umgebungsdruck entsprechender Druck an, so liegt der Schlauch 22a in entspanntem Zustand vor. Dadurch ist das Quetschventil 22 geöffnet und gibt den Durchgangskanal 26 frei. Sein Durchgangsquerschnitt entspricht dann demjenigen des Durchgangskanals 26 im sonstigen Bereich des Verbindungsweges 14, wie er durch die gestrichelte Linie angedeutet ist.

Zur Steuerung des Quetschventils 22 mittels des Steuergases über die Fluidleitung 44 ist die Steuerung 42 über eine Signalleitung 46 mit dem Elektromagneten 49 eines Mehrwegeventil 48 verbunden, welches in der Fluidleitung 44 vorgesehen ist. Das Mehrwegeventil 48 wird ohne ein elektrisches Steuersignal mittels Federkraft in eine Stellung gebracht oder in dieser Stellung gehalten,
in welcher der Durchgang der Fluidleitung 44 frei ist und Steuergas aus der Spülluft-Quelle 38 durch das Mehrwegeventil 48 hindurch in Richtung auf das Quetschventil 22 strömen kann.

Wird der Elektromagnet 49 des Mehrwegeventils 48 mit einem entsprechenden Steuersignal beaufschlagt und dadurch aktiviert, so nimmt das Mehrwegeventil 48 eine Stellung ein, in welcher es den zwischen dem Mehrwegeventil 48 und dem Quetschventil 22 liegende Abschnitt der Fluidleitung 44 mit der Umgebung verbindet. In dieser Stellung des Mehrwegeventils 48 wird die Fluidleitung 44 und somit das Quetschventil 22 folglich entlüftet.

Zwischen dem Mehrwegeventil 48 und dem Quetschventil 22 ist in der Fluidleitung 44 ein entriegelbares Rückschlagventil 50 angeordnet, wie es an und für sich bekannt ist. Dieses ist im Betrieb der Förderpumpe permanent aus der Hauptleitung 36 mit Druckluft aus der Spülluft-Quelle 38 beaufschlagt und dadurch in beiden Durchströmungsrichtungen entriegelt. Ohne Druckluftbeaufschlagung verschließt das Rückschlagventil 50 den Durchgang der Fluidleitung 44 in Richtung auf die Spülluft-Quelle 38.

Zusätzlich ist in der Fluidleitung 44 zwischen dem Mehrwegeventil 48 und dem Rückschlagventil 50 ein einstellbares Drosselrückschlagventil 52 vorgesehen. Dieses umfaßt in an und für sich bekannter Weise eine einstellbare Drossel 52a sowie ein unbelastetes Rückschlagventil 52b. Das Rückschlagventil 52b ist so ausgerichtet, daß das Drosselrückschlagventil 52 den Luftstrom in Richtung auf das Quetschventil 22 einstellbar drosselt, in der entgegengesetzten Richtung jedoch stets einen ungehinderten Durchstrom zuläßt.

Um Lackpulver aus der Befülleinrichtung 18 zum Vorlagebehälter 10 zu überführen, wird Lackpulver in der Befülleinrichtung 18 in an und für sich bekannter Weise fluidisiert. Fluidisiertes Lackpulver ist fließfähig, ähnlich einer Flüssigkeit, und folgt bereits aufgrund der Schwerkraft der Neigung des Verbindungsweges 14 zwischen der Befülleinrichtung 18 und dem Vorlagebehälter 10.

So lange noch kein Lackpulver zum Vorlagebehälter 10 gelangen soll, ist das Quetschventil 22 geschlossen.
Dazu wird es über die Fluidleitung 44 mit Steuergas beaufschlagt, weshalb der Elektromagnet 49 des Mehrwegeventils 48 deaktiviert bleibt oder wird. Das Mehrwegeventil 48 nimmt dann durch Federkraft diejenige Stellung ein, in welcher es die Spülluft-Quelle 38 mit dem Drosselrückschlagventil 52 verbindet. Das Drosselrückschlagventil 52 seinerseits läßt einen Gasstrom in Richtung auf das Quetschventil 22 zu; auf den konkreten Zweck des Drosselrückschlagventils 52 wird weiter unten nochmals näher eingegangen. Das entriegelbare Rückschlagventil 50 ist, wie erwähnt, normalerweise aus der Hauptleitung 36 druckluftbeaufschlagt und somit entriegelt, wodurch der Durchgang für das Steuergas in Richtung auf das Quetschventil 22 gewährleistet ist. Somit ist der Druckraum 22b des Quetschventils 22 mit Spülluft beaufschlagt, wodurch das Quetschventil 22 seine Schließstellung einnimmt.

Das Steuerventil 32 des Spülventils 24 wird nun mittels der Steuerung 42 derart angesteuert, daß Spülluft durch die Düse 28 in Richtung auf die Befülleinrichtung 18 in den Durchgangskanal 26 des Verbindungsweges 14 strömt. Auf diese Weise wird verhindert, daß fluidisiertes Lackpulver im Inneren der Befülleinrichtung 18 aufgrund der Schwerkraft über deren Abgabestutzen 16 in den Durchgangskanal 26 des Verbindungsweges 14 fließt.

Soll Lackpulver aus der Befülleinrichtung 18 in den Vorlagebehälter 10 überführt werden, so wird das Quetschventil 22 geöffnet. Dazu wird der Elektromagnet 49 des Mehrwegeventils 48 über ein entsprechendes Steuersignal der Steuerung 42 aktiviert, wodurch es in seine Entlüftungsstellung gebracht wird, in der die Fluidleitung 44 mit der Umgebung in Verbindung steht. Das Quetschventil 22 wird somit über die Fluidleitung 44 - das Rückschlagventil 50 ist, wie erwähnt, entriegelt und das Rückschlagventil 52b gibt die Strömung in Richtung auf das Mehrwegeventil 48 frei - entlüftet und öffnet. Dadurch wird der Durchgangskanal 26 des Verbindungsweges 14 frei. Das Steuerventil 32 des Spülventils 24 wird jetzt derart angesteuert, daß keine Spülluft mehr aus der Düse 28 strömt, sondern Spülluft aus der Düse 30 in Richtung auf das Quetschventil 22 geblasen wird. Nun wird fluidisiertes Lackpulver in der Befülleinrichtung 18 nicht mehr durch die Spülluft aus der Düse 28 des Spülventils 24 in die Befülleinrichtung 18 zurückgedrängt, sondern fließt in den Durchgangskanal 26 des Verbindungsweges 14. Grundsätzlich würde bereits die Schwerkraft ausreichen, um das fluidisierte Lackpülver zum Vorlagebehälter 10 fließen zu lassen. Unterstützend reißt die aus der Düse 30 des Spülventils 24 strömende Spülluft von der Befülleinrichtung 18 kommendes und zum Quetschventil 22 gelangendes fluidisiertes Lackpulver mit sich und fördert dieses so durch das offene Quetschventil 22 hindurch in den Vorlagebehälter 10. Dabei wird gleichzeitig die Fluidisierung des Lackpulvers aufrecht erhalten.

Ist entsprechend einer bestimmten Sollvorgabe genug Lackpulver von der Befülleinrichtung 18 in den Vorlagebehälter 10 überführt worden, so wird zunächst das Steuerventil 32 des Spülventils 24 derart angesteuert, daß zusätzlich Spülluft aus der Düse 28 in Richtung auf die Befülleinrichtung 18 strömt. Dadurch wird ein weiteres Einfließen von fluidisiertem Lackpulver aus der Befülleinrichtung 18 in den Durchgangskanal 26 des Verbindungsweges 14 unterbunden. Gleichzeitig wird durch die aus der Düse 30 des Spülventils 24 strömende Spülluft der Durchgangskanal 26 im Bereich des Quetschventils, also der Innenraum des Quetschventils 22, von fluidisiertem Lackpulver befreit und gleichsam freigeblasen. Dabei wird auch dieses Lackpulver noch in den Vorlagebehälter 10 überführt.

Nach einem gewissen Zeitraum, der zur Reinigung des Quetschventils 22 ausreicht, oder während dieses Zeitraumes, wird das Quetschventil 22 geschlossen, indem der Elektromagnet 49 des Mehrwegeventils 48 deaktiviert wird. Das Mehrwegeventil 48 nimmt mittels Federkraft diejenige Stellung ein, in welcher das Quetschventil 22 über die Leitung 44 mit Druckluft beaufschlagt ist. Das Steuerventil 32 des Spülventils 24 wird derart angesteuert, daß Spülluft nur noch über die Düse 28 in den Durchgangskanal 26 des Verbindungsweges eingeblasen wird. So daß kann kein Lackpulver mehr aus der Befülleinrichtung 18 in den Verbindungsweg 14 treten.

Solange noch kein Lackpulver aus dem Vorlagebehälter 10 in Richtung auf einen Verbraucher entnommen wurde, ist dringend zu vermeiden, daß Pulver aus der Befülleinrichtung 18 in Richtung auf den Vorlagebehälter 10 und in diesen hineinströmt. Im ungünstigsten Fall würde sich dann nämlich der Vorlagebehälter 10 vollständig füllen und eine Fluidisierung des Lackpulvers wäre nicht mehr aufrechtzuerhalten. Für das oben beschriebene Ausführungsbeispiel bedeutet dies, daß das Quetschventil 22 geschlossen bleiben muß, bis der Vorlagebehälter 10 zur Aufnahme von weiterem Lackpulver bereit ist.

Wäre das Quetschventil 22 wie üblich lediglich ohne weitere Maßnahme mit Druckluft beaufschlagt, würde es sich bei einem Ausfall der die Druckluft zur Verfügung stellenden Spülluft-Quelle 38 öffnen. Um dies zu vermeiden, ist das entriegelbare Rückschlagventil 50 in der Fluidleitung 44 vorgesehen.

Wie oben erwähnt, ist dieses bei vorhandener Druckluftbeaufschlagung aus der Spülluft-Quelle 38 entriegelt, so daß der Durchgang am Rückschlagventil 50 in beide Richtungen frei ist. Bei einem Ausfall der Spülluft-Quelle 38 wird die Entriegelung des Rückschlagventils 50 jedoch aufgehoben, so daß das Rückschlagventil 50 in die von dem Quetschventil 22 wegweisende Richtung schließt. Somit kann die am Quetschventil 22 anliegende Druckluft nicht entweichen, wodurch die Druckluftbeaufschlagung im Quetschventil 22 aufrecht erhalten bleibt und dieses weiterhin seine Schließstellung einnimmt.

Da bei einem Ausfall der Spülluft-Quelle 38 keine Spülluft mehr aus der Düse 28 des Spülventils 24 strömt, kann zwar Lackpulver aus der Befülleinrichtung 18 in deren Auslaßstutzen 16 und darüber in den Durchgangskanal 26 des Verbindungsweges 14 rieseln. Der Durchgang des Quetschventils 22 ist jedoch verschlossen, so daß keine Gefahr besteht, daß unerwünscht Lackpulver in den Vorlagebehälter 10 gelangt.

Andere Möglichkeiten der Betriebsstörung bestehen z.B. in einer Unterbrechung der elektrischen Energieversorgung und/oder einem Versagen der Steuerung 42. In beiden Fällen wäre unter anderem das Mehrwegeventil 48 nicht mehr steuerbar und die Schließstellung des Quetschventils 22 sollte zumindest so lange aufrecht erhalten bleiben, bis der Fehler behoben worden ist. Aus diesem Grund ist das Mehrwegeventil 48 in der bereits erwähnten Weise federbeaufschlagt, daß es bei nicht aktivierten Elektromagneten 49 diejenige Stellung einnimmt, in welcher der Durchgang von der Druckluftquelle 38 in Richtung auf das Quetschventil 22 frei ist. Auf diese Weise bleibt das Quetschventil 22 bei einem Ausfall der elektrischen Energieversorgung und/oder der Steuerung 42 stets druckluftbeaufschlagt und somit in seiner Schließstellung.

Das Drosselrückschlagventil 52 eröffnet die Möglichkeit, daß das Quetschventil 22 nicht nur schlagartig, sondern auch verzögert schließen kann. Wenn der Verbindungsweg 14 zwischen der Befülleinrichtung 18 und dem Vorlagebehälter 10 verschlossen werden soll, wird, wie oben erwähnt, Spülluft aus der Düse 30 des Spülventils 24 in Richtung auf das Quetschventil 22 geblasen. Durch die Drosselung mittels des Drosselrückschlagventils 52 wird das Quetschventil 22 jedoch nicht mit dem stärksten möglichen Steuergasdruck beaufschlagt, sondern abhängig von der eingestellten Drosselung des Drosselrückschlagventils 52 mit einem entsprechend verminderten Druck. Beispielsweise ist die Drossel 52a zunächst so eingestellt, daß das Quetschventil 22 nur mit einem Druck beaufschlagt ist, bei welchem es halb schließt. Aus diesem Grund ist der Durchgangsweg des Quetschventils 22 durch die aus der Düse 30 des Spülventils 24 strömende Spülluft besser zu reinigen. Nach einer gewissen Zeit ist trotz der Drosselung durch die Drossel 52a im Druckraum 22b des Quetschventils 22 der volle Druck aufgebaut. Falls es gewünscht ist, kann die Drosselung durch das Drosselrückschlagventil 52 auch bereits vorher aufgehoben werden. Dann ist das Quetschventil 22 mit vollem Druck beaufschlagt und dadurch vollständig geschlossen. Das Ausmaß der Drosselung durch das Drosselrückschlagventil 52 wird ebenfalls mittels der Steuerung 42 gesteuert, wozu diese über eine Signalleitung 54 mit dem Drosselrückschlagventil 52 verbunden ist.

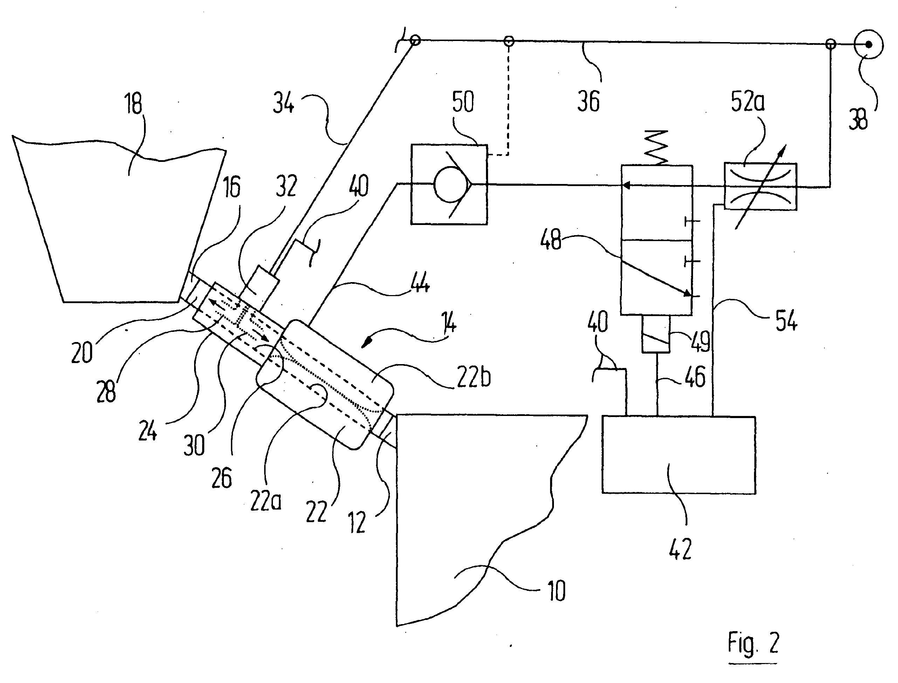

Ein verzögertes Schließen des Quetschvenils 22 wird auch durch das in Figur 2 gezeigte Ausführungsbeispiel ermöglicht. Dort tragen der Figur 1 entsprechende Komponenten dasselbe Bezugszeichen wie in Figur 1.

Wie zu erkennen ist, ist bei dem Ausführungsbeispiel von Figur 2 anstelle des Drosselrückschlagventils 52 lediglich das Drosselventil 52a in der Fluidleitung 44 vorgesehen. Das Drosselventil 52a ist dabei in Richtung auf das Quetschventil 22 gesehen direkt hinter der Spülluft-Quelle 38 angeordnet. Ein Entlüften der Fluidleitung 44 bzw. des Quetschventil 22 wird auch hier dadurch erreicht, daß das Mehrwegeventil 48 in seine Entlüftungsstellung gebracht wird. Im Gegensatz zum Ausführungsbeispiel von Figur 1 strömt beim Entlüften jedoch keine Luft durch das Drosselventil 52a, so daß dieses nicht in Richtung auf die Spülluft-Quelle 38 entriegelt sein muß, damit eine sichere Entlüftung gewährleistet ist.

## Patentansprüche

1. Vorrichtung zum Fördern fluidisierbarer Medien, insbesondere von Lackpulver, mit
a) einem Vorlagebehälter (10), aus welchem fluidisiertes Medium zu einem Verbraucher förderbar ist;
b) einer Befülleinrichtung (18), aus welcher fluidisiertes Medium in den Vorlagebehälter (10) förderbar ist;
c) einem Verbindungsweg (14), welchen fluidisiertes Medium auf dem Weg von der Befülleinrichtung (18) in den Vorlagebehälter (10) durchströmt;
d) einer im Verbindungsweg (14) vorgesehenen Ventileinrichtung (22, 24), mittels welcher der Verbindungsweg (14) wahlweise verschließbar oder freigebbar ist und welche ein fluidbetätigtes Ventil (22) umfasst, mit dem der Verbindungsweg (14) wahlweise verschließbar oder freigebbar ist und welches über eine Fluidleitung (44) mit einer Fluidquelle (38) in Verbindung steht;
e) Betriebsmitteln (38, 42), welche zum Betrieb der Ventileinrichtung (22, 24) notwendig sind,
**dadurch gekennzeichnet, dass**
f) eine Sicherheitseinrichtung (48, 50) vorgesehen ist, durch welche die Ventileinrichtung (22, 24) bei einem teilweisen oder vollständigen Ausfall der Betriebsmittel (38, 42) derart steuerbar ist, dass sie ihre Schließstellung einnimmt, und welche
fa) ein mittels Fluidbeaufschlagung entriegelbares Rückschlagventil (50) umfasst, welches in der Fluidleitung (44) angeordnet ist und zum Zwecke seiner Entriegelung aus derselben Fluidquelle (38) mit Fluid beaufschlagbar ist wie das fluidbetätigte Ventil (22) der Ventileinrichtung (22, 24), und welches ohne Fluidbeaufschlagung die Fluidleitung (44) in Richtung auf die Fluidquelle (38) verschließt;
fb) außerdem ein durch ein Steuersignal einstellbares Ventil (48) umfasst, welches in der Fluidleitung (44) zwischen dem entriegelbaren Rückschlagventil (50) und der Fluidquelle (38) angeordnet ist und ohne eine Signalbeaufschlagung eine Stellung einnimmt, in welcher es die Fluidleitung (44) in Richtung auf das fluidbetätigte Ventil (22) freigibt.

2. Vorrichtung nach Anspruch 1, **dadurch gekennzeichnet, dass** das durch ein Steuersignal einstellbare Ventil (48) derart ausgebildet ist, dass es bei einer Signalbeaufschlagung eine Stellung einnimmt, in welcher die Fluidleitung (44) mit der Umgebung in Verbindung steht.

3. Vorrichtung nach Anspruch 1 oder 2, **dadurch gekennzeichnet, dass** das fluidbetätigte Ventil (22) derart einstellbar ist, dass es den Durchgang (26) des Verbindungsweges (14) nur teilweise freigibt.

4. Vorrichtung nach Anspruch 3, **dadurch gekennzeichnet, dass** in der zum fluidbetätigten Ventil (22) führenden Fluidleitung (44) ein einstellbares Drosselventil (52a) vorgesehen ist.

5. Vorrichtung nach Anspruch 4, **dadurch gekennzeichnet, dass** das Drosselventil (52a) zusammen mit einem Rückschlagventil (52b) ein einstellbares Drosselrückschlagventil (52) bildet, durch welches der Fluidstrom aus der Fluidquelle (38) in Richtung auf das fluidbetätigte Ventil (22) drosselbar, in Gegenrichtung jedoch freigegeben ist.

6. Vorrichtung nach einem der Ansprüche 1 bis 5, **dadurch gekennzeichnet, dass** die Ventileinrichtung (22, 24) eine Spüleinrichtung (24) umfasst, mittels welcher ein Spülgas in den Durchgang des fluidbetätigten Ventils (22) einblasbar ist.

## Claims

1. A device for conveying fluidisable media, in particular coating powder, having
a) a reservoir (10) from which fluidised medium can be conveyed to a consumer;
b) a filling device (18) from which fluidised medium can be conveyed to the reservoir (10);
c) a connection path (14) through which fluidised medium flows on the way from the filling device (18) to the reservoir (10);
d) a valve device (22, 24) which is provided in the connection path (14) and by means of which the connection path (14) is optionally closable or releasable and which includes a fluid-actuated valve (22), the connection path (14) being optionally closable or releasable by means of the fluid-actuated valve (22) and the latter being in communication with a fluid source (38) by way of a fluid line (44) ;
e) operating means (38, 42) which are required for operation of the valve device (22, 24),
**characterised in that**
f) a safety device (48, 50) is provided, by means of which, in the event of partial or total failure of the operating means (38, 42), the valve device (22, 24) is controllable such that it adopts its closed position, and which
fa) includes a nonreturn valve (50) which is unlockable by means of the action of fluid and which is arranged in the fluid line (44) and for the purpose of being unlocked may be acted upon with fluid from the same fluid source (38) as the fluid-actuated valve (22) of the valve device (22, 24), and which closes the fluid line (44) in the direction of the fluid source (38) in the absence of the action of fluid;
fb) furthermore includes a valve (48) which may be adjusted by a control signal and is arranged in the fluid line (44) between the unlockable nonreturn valve (50) and the fluid source (38) and in the absence of the action of a signal adopts a position in which it releases the fluid line (44) in the direction of the fluid-actuated valve (22).

2. A device according to Claim 1, **characterised in that** the valve (48) which may be adjusted by a control signal is constructed such that in the event of action by a signal it adopts a position in which the fluid line (44) is in communication with the surroundings.

3. A device according to Claim 1 or 2, **characterised in that** the fluid-actuated valve (22) is adjustable such that it only partially releases the passage (26) through the connection path (14).

4. A device according to Claim 3, **characterised in that** an adjustable choke valve (52a) is provided in the fluid line (44) that leads to the fluid-actuated valve (22).

5. A device according to Claim 4, **characterised in that**, together with a nonreturn valve (52b), the choke valve (52a) forms an adjustable nonreturn choke valve (52) by means of which the fluid flow from the fluid source (38) may be choked in the direction of the fluid-actuated valve (22) but is released in the opposite direction.

6. A device according to one of Claims 1 to 5, **characterised in that** the valve device (22, 24) includes a flushing device (24) by means of which a flushing gas may be blown into the passage through the fluid-actuated valve (22).

## Revendications

1. Dispositif pour véhiculer des milieux fluidisables, en particulier de la peinture en poudre, comprenant :
a) un récipient collecteur (10), à partir duquel le milieu fluidisé peut être véhiculé vers un utilisateur ;
b) un équipement de remplissage (18), à partir duquel le milieu fluidisé peut être véhiculé dans le récipient collecteur (10) ;
c) une voie de liaison (14), que parcourt le milieu fluidisé sur son chemin de l'équipement de remplissage (18) au récipient collecteur (10) ;
d) un ensemble de soupapes (22, 24) prévu dans la voie de liaison (14), au moyen duquel la voie de liaison (14) peut être au choix fermée ou libérée et qui comprend une soupape (22) actionnée par fluide, par laquelle la voie de liaison (14) peut être au choix fermée ou libérée et qui est reliée à une source de fluide (38) par l'intermédiaire d'une conduite de fluide (44) ;
e) des moyens d'exploitation (38, 42), qui sont nécessaires pour faire fonctionner l'ensemble de soupapes (22, 24),
**caractérisé en ce que**
f) il est prévu un équipement de sécurité (48, 50), par lequel l'ensemble de soupapes (22, 24) peut, en cas de défaillance partielle ou totale des moyens d'exploitation (38, 42), être commandé de telle sorte qu'il prend sa position fermée, et qui
fa) comprend une soupape antiretour (50) pouvant être déverrouillée en étant sollicitée par un fluide, qui est disposée dans la conduite de fluide (44) et, pour son déverrouillage, peut être sollicitée par fluide à partir de la même source de fluide (38) que la soupape (22) actionnée par fluide de l'ensemble de soupapes (22, 24), et qui, en l'absence de sollicitation par fluide, ferme la conduite de fluide (44) en direction de la source de fluide (38) ;
fb) et comprend en outre une soupape (48) pouvant être réglée par un signal de commande, qui est disposée dans la conduite de fluide (44) entre la soupape antiretour déverrouillable (50) et la source de fluide (38) et qui, en l'absence de sollicitation par signal, prend une position dans laquelle elle libère la conduite de fluide (44) en direction de la soupape (22) actionnée par fluide.

2. Dispositif selon la revendication 1, **caractérisé en ce que** la soupape (48) pouvant être réglée par un signal de commande est conçue de telle sorte qu'en cas de sollicitation par signal, elle prend une position dans laquelle la conduite de fluide (44) est reliée à l'environnement.

3. Dispositif selon la revendication 1 ou 2, **caractérisé en ce que** la soupape (22) actionnée par fluide peut être réglée de telle sorte qu'elle ne libère que partiellement le passage (26) de la voie de liaison (14).

4. Dispositif selon la revendication 3, **caractérisé en ce qu'**une soupape d'étranglement réglable (52a) est prévue dans la conduite de fluide (44) menant à la soupape (22) actionnée par fluide.

5. Dispositif selon la revendication 4, **caractérisé en ce que** la soupape d'étranglement (52a) forme conjointement avec une soupape antiretour (52b) une soupape antiretour d'étranglement réglable (52) par laquelle l'écoulement de fluide à partir de la source de fluide (38) peut être étranglé en direction de la soupape (22) actionnée par fluide, mais est libéré dans la direction contraire.

6. Dispositif selon l'une des revendications 1 à 5, **caractérisé en ce que** l'ensemble de soupapes (22, 24) comprend un organe de rinçage (24) au moyen duquel un gaz de rinçage peut être insufflé dans le passage de la soupape (22) actionnée par fluide.
